# EUROPÄISCHE PATENTSCHRIFT

(11) **EP 0 895 243 B1**
(45) Veröffentlichungstag und Bekanntmachung des Hinweises auf die Patenterteilung: **17.08.2005**
(21) Anmeldenummer: 98110381.5
(22) Anmeldetag: 06.06.1998
(51) Int. Cl.: G11B 33/04

(54) **Blechbehälter für eine CD-Platte**
Sheet metal container for CD
Réceptacle en tôle pour CD

(30) Priorität: 29.07.1997 DE 19732596
(43) Veröffentlichungstag der Anmeldung: 03.02.1999
(73) Patentinhaber: Staehle GmbH Blechpackungen, 67105 Schifferstadt (DE)
(72) Erfinder: Bodenschatz, Jürgen, 69221 Dossenheim (DE); Fischer, Hermann, 38176 Wendeburg (DE); Staehle, Manfred, 70193 Stuttgart (DE)
(74) Vertreter: Kesselhut, Wolf, Dipl.-Ing.

(56) Entgegenhaltungen:
- WO-A-92/06904
- DE-U- 29 508 511
- US-A- 4 238 030
- US-A- 4 499 996
- US-A- 4 643 308
- US-A- 5 332 089

## Beschreibung

Die Erfindung betrifft einen Blechbehälter für eine CD-Platte mit einem Unterteil, das eine Aufnahme für die CD oder einen ähnlichen, scheibenförmigen, eine Zentrieröffnung aufweisenden Datenträger enthält, wobei im Boden des Unterteiles eine erhöhte Auflage für die Platte geformt ist, und daß ein Deckelteil mit nach unten gerichtetem Rand vorgesehen ist, das den Rand des Unterteils umfaßt.

Ein derartiger Blechbehälter ist bekannt (DE 295 08 511 U1), wobei im Boden des Unterteils ein Aufnahmekörper aus Blech geformt ist, der ein zentrales, im wesentlichen zylindrisches, in die Zentrieröffnung der CD klemmend eingreifendes Halteteil aufweist, dessen Durchmesser geringfügig größer ist als der Durchmesser der Zentrieröffnung. Der wesentliche Nachteil dieser bekannten Ausführungsform besteht darin, daß die vorhandenen Lochtoleranzen in der CD von dem starren, auch mit Toleranzen gefertigten Aufnahmekörper bzw. Dorn aus Metall nicht kompensiert werden, so daß die CD auf diesem Dorn entweder stramm oder zu locker sitzt. Wenn eine zu feste Anordnung gegeben ist, dann besteht die Gefahr der Zerstörung beim Einsetzen oder Herausnehmen oder aber auch Beschädigungen durch auftretende Temperaturdifferenzen. Bei einem zu lockeren Sitz ist die Gefahr eines Herausfallens gegeben. Bei dieser bekannten Ausführungsform ist es außerdem nachteilig, daß Deckel- und Unterteil getrennt sind, was eine unbequeme Handhabung zur Folge hat und außerdem zu Verwechslungen beim Aufsetzen der Deckel auf Unterteile solcher Verpackungen führt, die mit entsprechenden Kennzeichnungen versehen sind. Ein weiterer wesentlicher Nachteil besteht darin, daß der Boden mit einem Spiegel versehen ist, der von der zur Verfügung stehenden Höhe einen Teil verbraucht, so daß die CD-Platte nur geringfügig vom Spiegel absteht und damit das Ergreifen schwierig ist.

Aus der US-A-5 332 089 ist eine Aufbewahrungstasche für CD's bekannt, welche einen Grundkörper mit Seitenwänden aus flexiblem Material, insbesondere aus Papier, aufweist, an denen ein zylindrisch ausgestalteter Haltekörper stirnseitig angeklebt ist, der in die Zentrieröffnung der CD eingreift, um diese auf dem zylindrischen Halter zu fixieren.

Der Erfindung liegt die Aufgabe zugrunde, einen Blechbehälter der eingangs genannten Art so auszubilden, daß das Formstück einfach ausgewechselt werden kann und daß Lochtoleranzen an der Platte und im Durchmesser der Aufnahme sowie Wärmedifferenzen ausgeglichen werden.

Diese Aufgabe wird nach der Erfindung durch die Merkmale von Anspruch 1 gelöst.

Weiterhin ist es vorteilhaft, daß als Formstück ein mittig an der Auflage befestigter Ring mit kreisförmigem oder ovalem Querschnitt vorgesehen ist.

Es wird weiterhin vorgeschlagen, daß als Formstück ein Ring mit mehreckigem Querschnitt vorgesehen ist, wobei die äußere Ringfläche zum Boden und gegen die Mitte des Ringes geneigt ist.

Es ist vorteilhaft, daß der Ring an einem an der Auflage ausgeformten Wulst gehalten ist.

Nach einem weiteren Vorschlag geht man so vor, daß der Ring mittels einer an der Auflage befestigten Halteplatte gehalten ist.

Schließlich ist es vorteilhaft, daß das Unterteil und der Deckel mittels eines Scharniers miteinander verbunden sind.

Die Erfindung bringt insbesondere den Vorteil, daß sich die Aufnahme für die CD-Platte deren Zentrieröffnung sowohl hinsichtlich vorhandener Fertigungstoleranzen als auch Wärmedifferenzen ohne weiteres anpassen kann. Deckel und Unterteil bilden eine Einheit, so daß es zu keinen Verwechslungen an solchen Verpackungen kommen kann. Durch die Ausgestaltung des Behälterunterteils in Verbindung mit den eingesetzten Formstücken läßt sich die Platte an ihrem Rand zum Einsetzen und Herausnehmen aus der Verpackung gut ergreifen. Damit läßt sich ein solches gummielastisches Formstück bei einer derartigen Blechverpackung herstellungstechnisch vorteilhaft nutzen und in einer formschlüssigen Verbindung anbringen, andererseits aber einfach auswechseln.

Die Erfindung wird in der nachfolgenden Beschreibung anhand von in den Zeichnungen dargestellten Ausführungsbeispielen näher erläutert.

Es zeigen,
- Fig. 1: eine Druntersicht des Blechbehälters,
- Fig. 2: eine Ansicht der Scharnierseite des Behälters,
- Fig. 3: eine Ansicht in Pfeilrichtung X gemäß Fig. 1,
- Fig. 4: einen Schnitt nach der Linie A-A in Fig. 1,
- Fig. 5: einen Schnitt nach der Linie D-D in Fig. 1 und
- Figuren 6 bis 9: verschiedene Ausgestaltungen der Aufnahmen und Halterungen der Platte in einer Teilansicht.

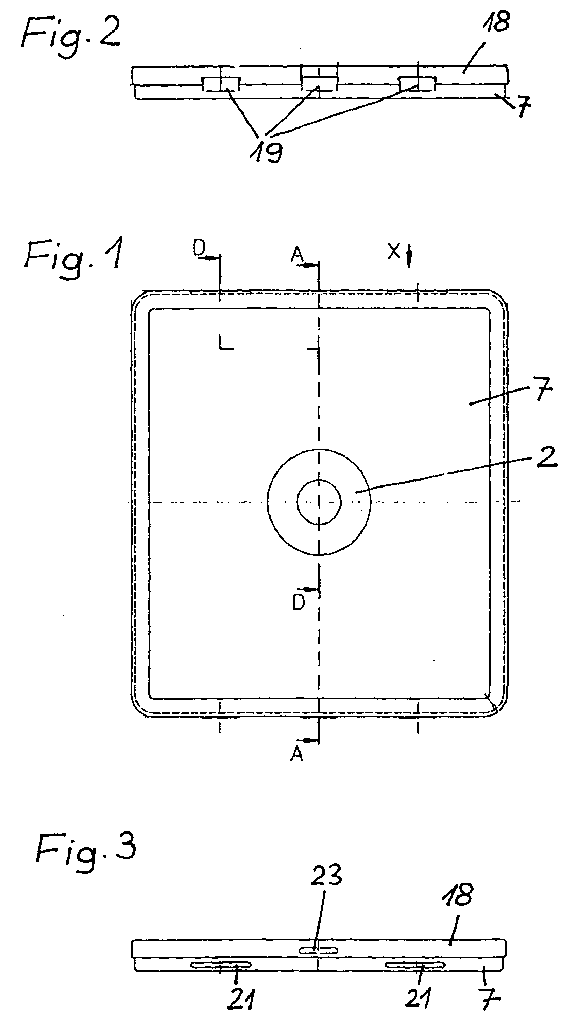

Der in den Figuren 1 bis 5 dargestellte Blechbehälter besteht im wesentlichen aus einem Behälterunterteil 7 und einem Deckel 18, die mit Hilfe eines Scharniers 19 miteinander verbunden sind. Der Dekkelrand 22 ist nach innen hin umgebördelt und über den Rand 24 des Unterteils 7 gestülpt, wobei an der dem Scharnier 19 gegenüberliegenden Seite am Unterteil Rastprägungen 23 vorgesehen sind, an denen der Deckelrand 22 gehalten wird. Das Deckelteil 18 und das Unterteil 7 besitzen eine im wesentlichen rechteckige Form, die an den Ecken abgerundet ist, wobei diese Form der bei solchen CD-Platten-Verpackungen angepaßten Form der gebräuchlichen Behälter aus Kunststoff angepaßt ist. An der Seite der Rastprägung 23 befinden sich am Unterteil 7 weitere Prägungen 21.

Der Boden 11 des Unterteiles 7 ist beidseitig zur Mitte 25 nach innen hin eingezogen und bildet hier eine erhöhte Auflage 6, die kreisförmig oder aber auch mehreckig ausgebildet sein kann. An dieser Auflage 6 ist im Bereich der Mitte 25 ein Formstück eingesetzt, das zur Halterung einer derartigen CD-Platte 1 dient. Der Rand der CD-Platte 1 befindet sich in einem ausreichenden Abstand zum Boden 11 und kann somit gut erfaßt werden.

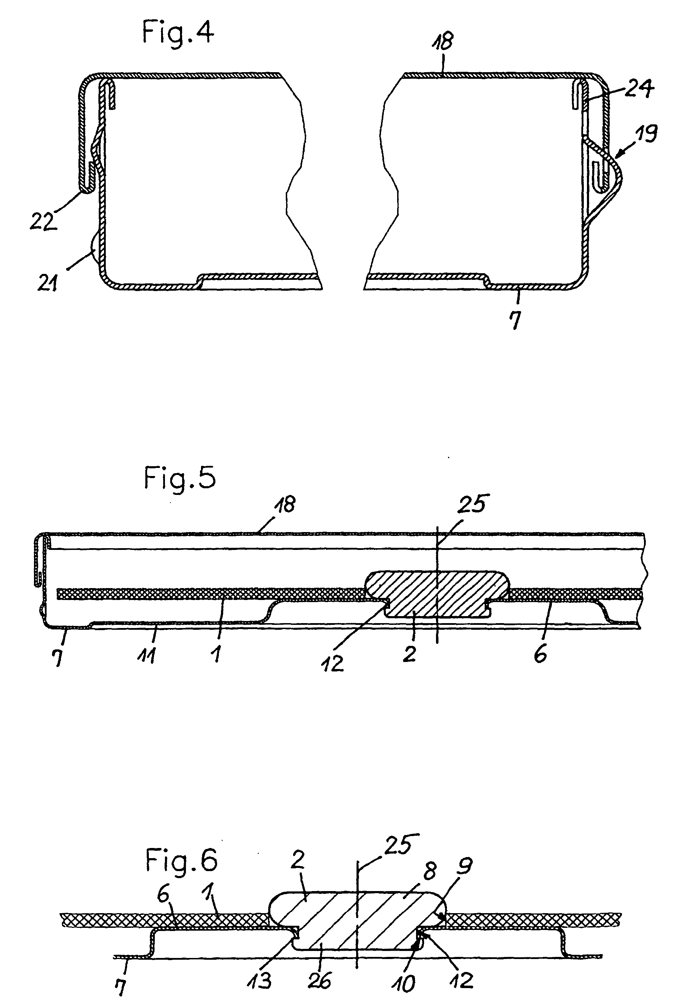

In den Figuren 5 und 6 ist ein erstes Ausführungsbeispiel für die Ausgesstaltung eines Formstückes 2 dargestellt, wobei dieses Formstück aus einem elastischen Werkstoff besteht mit einer Elastizität im Bereich von vorzugsweise etwa 50 - 75 Shore. Dieses Formstück 2 ist in eine zentrale Öffnung 10 der Auflage 6 eingesetzt, wobei der Öffnungsrand 13 geringfügig umgebördelt ist und in einer Ringnut 12 angeordnet ist, so daß das Formstück 2 sicher an der Auflage 6 gehalten wird. Der untere Abschnitt bzw. das Halteteil 26 steht hierbei etwas über den Öffnungsrand 13 vor. Weiterhin besitzt das Formstück 2 einen kreisförmigen, in etwa zylindrischen Abschnitt 8, der der Zentrieröffnung 9 der Platte 1 angepaßt ist und am Rand abgerundet ist. Durch die Ausgestaltung des Öffnungsrandes 13 kann das Formstück 2 sehr einfach eingesetzt werden.

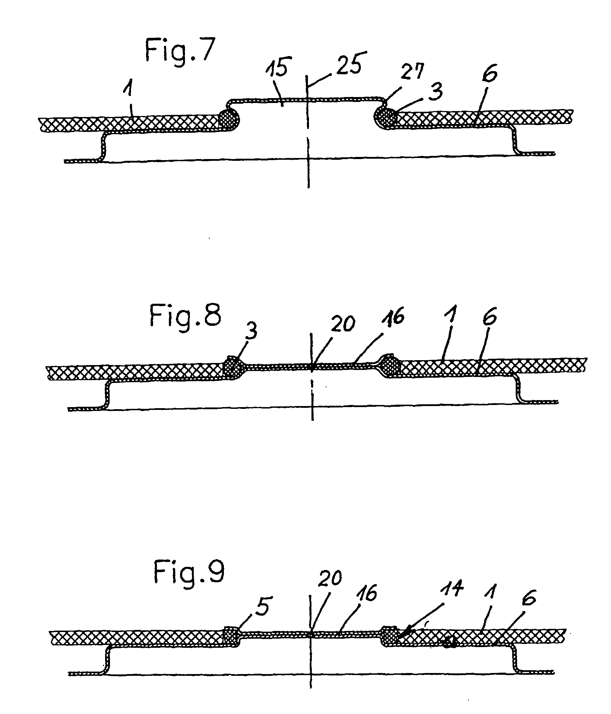

Bei der weiteren Ausführungsform nach Fig. 7 ist als Formstück ein O-Ring vorgesehen, der in der Mitte 25 der Auflage 6 angeordnet wird. Zur Halterung dient ein Wulst 15, der in das Behälterunterteil 7 eingeformt wird, wobei sich der O-Ring 3 über diesen verbreiterten Wulstrand 27 stülpen läßt.

Bei der Ausführungsform nach Fig. 8 ist ein entsprechender O-Ring 3 als Formstück vorgesehen, wobei zur Halterung eine Halteplatte dient, die an einem erhöhten Abschnitt der Auflage 6 beispielsweise durch eine Vernietung 20 befestigt ist.

Eine andere Variante ist in Fig. 9 gezeigt, wobei dort ein im Querschnitt viereckiger Fixierring 5 vorgesehen ist, dessen äußere Ringfläche 14 geneigt ist. Die Neigung ist derart, daß der Durchmesser an der oberen Ringfläche größer ist als an der unteren Ringfläche, so daß die CD-Platte 1 sicher gehalten werden kann. Die Befestigung erfolgt mit Hilfe einer Halteplatte 16, die auf die Auflage 6 genietet wird. In diesem Bereich ist die Auflage etwas nach oben gezogen.

## Patentansprüche

1. Blechbehälter für eine CD-Platte mit einem Unterteil, das eine Aufnahme für die CD oder einen ähnlichen, scheibenförmigen, eine Zentrieröffnung aufweisenden Datenträger enthält, wobei im Boden des Unterteiles eine erhöhte Auflage für die Platte geformt ist, und daß ein Deckelteil mit nach unten gerichtetem Rand vorgesehen ist, das den Rand des Unterteiles umfasst, **dadurch gekennzeichnet, daß** als Aufnahme und Halterung für die Platte (1) ein in etwa zylindrisch ausgebildetes Formstück (2, 3, 4, 5) aus gummielastischem Werkstoff vorgesehen ist, das mit seinem in den Behälterraum ragenden Abschnitt (8) klemmend in die Zentrieröffnung (9) der Platte (1) eingreift und das an der Auflage (6) in einer formschlüssigen Verbindung angebracht ist.

2. Blechbehälter nach Anspruch 1, **dadurch gekennzeichnet, daß** das Formstück (2) an einer zentralen Öffnung (10) der Auflage (6) im Boden (11) mittels des in eine Ringnut (12) des Formstückes (2) eingreifenden Öffnungsrandes (13) gehalten ist.

3. Blechbehälter nach Anspruch 1, **dadurch gekennzeichnet, daß** als Formstück ein mittig an der Auflage (6) befestigter Ring mit kreisförmigem oder ovalem oder mehreckigem Querschnitt vorgesehen ist.

4. Blechbehälter nach Anspruch 3, **dadurch gekennzeichnet, daß** der Ring (5) einen mehreckigen Querschnitt aufweist, wobei die äußere Ringfläche (14) zum Boden (11) und gegen die Mitte des Ringes (5) geneigt ist.

5. Blechbehälter nach einem der Ansprüche 3 oder 4, **dadurch gekennzeichnet, daß** der Ring (3) an einem an der Auflage (6) ausgeformten Wulst (15) gehalten ist.

6. Blechbehälter nach einem der Ansprüche 3 bis 5, **dadurch gekennzeichnet, daß** der Ring (3, 5) mittels einer an der Auflage (6) befestigten Halteplatte (16) gehaltert ist.

7. Blechbehälter nach Anspruch 1 bis 6, **dadurch gekennzeichnet, daß** das Unterteil (7) und der Deckel (18) mittels eines Scharniers (19) miteinander verbunden sind.

## Claims

1. Sheet metal container for a compact disc comprising a lower part which contains a receiver for the CD or a similar disc-shaped data carrier, comprising a central opening, a raised support for the disc being formed in the base of the lower part and a cover part with a downwardly directed edge being provided, the cover part encompassing the edge of the lower part, **characterised in that** a substantially cylindrical moulding (2, 3, 4, 5) made of resilient material is provided as the receiver and holder for the disc (1) and engages with its portion (8) projecting into the container space, in the central opening (9) of the disc (1) in a fixing manner and is provided on the support (6) with interlocking fit.

2. Sheet metal container according to claim 1, **characterised in that** the moulding (2) is held, at a central opening (10) of the support (6) in the base (11), by means of the opening edge (13) engaging in an annular groove (12) of the moulding (2).

3. Sheet metal container according to claim 1, **characterised in that** a ring fastened centrally to the support (6) and with circular or oval or polygonal cross-section is provided as the moulding.

4. Sheet metal container according to claim 3, **characterised in that** the ring (5) has a polygonal cross-section, the outer annular face (14) being inclined toward the base (11) and toward the centre of the ring (5).

5. Sheet metal container according to either claim 3 or claim 4, **characterised in that** the ring (3) is held on a bead (15) formed on the support (6).

6. Sheet metal container according to any one of claims 3 to 5, **characterised in that** the ring (3, 5) is held by means of a holding plate (16) fastened to the support (6).

7. Sheet metal container according to claims 1 to 6, **characterised in that** the lower part (7) and the cover (18) are connected by means of a hinge (19).

## Revendications

1. Boîtier de tôle pour un disque compact comportant une partie inférieure, qui contient un réceptacle pour le disque compact ou un support de données similaire en forme de disque, présentant une ouverture centrale, un support surélevé étant formé pour le disque dans le fond de la partie inférieure, et dans lequel une partie formant couvercle présentant un bord orienté vers le bas est prévue, qui entoure le bord de la partie inférieure, **caractérisé en ce qu'**une pièce moulée (2, 3, 4, 5) en matériau caoutchouteux élastique, réalisée de manière sensiblement cylindrique, est prévue pour recevoir et supporter le disque (1), qui par sa section (8) faisant saillie dans l'espace formant boîtier vient en prise par encliquetage dans l'ouverture de centrage (9) du disque (1) et qui est montée sur le support (6) dans une liaison par correspondance de formes.

2. Boîtier de tôle selon la revendication 1, **caractérisé en ce que** la pièce moulée (2) est maintenue à une ouverture centrale (10) du support (6) dans le fond (11) au moyen du bord d'ouverture (13) venant en prise dans une rainure annulaire (12) de la pièce moulée (2).

3. Boîtier de tôle selon la revendication 1, **caractérisé en ce qu'**un anneau de section transversale circulaire ou ovale ou polygonale, fixé de manière centrale sur le support (6), est prévu comme pièce moulée.

4. Boîtier de tôle selon la revendication 3, **caractérisé en ce que** l'anneau (5) présente une section transversale polygonale, la surface d'anneau extérieure (14) étant inclinée en direction du fond (11) et vers le centre de l'anneau (5).

5. Boîtier de tôle selon l'une des revendications 3 et 4, **caractérisé en ce que** l'anneau (3) est maintenu sur un bourrelet (15) formé sur le support (6).

6. Boîtier de tôle selon l'une des revendications 3 à 5, **caractérisé en ce que** l'anneau (3, 5) est maintenu au moyen d'une plaque de maintien (16) fixée au support (6).

7. Boîtier de tôle selon l'une des revendications 1 à 6, **caractérisé en ce que** la pièce inférieure (7) et le couvercle (18) sont reliés ensemble au moyen d'une charnière (19).
